(19) Europäisches Patentamt
European Patent Office
Office européen des brevets

(11) Veröffentlichungsnummer: **0 427 048 A2**

# (12) EUROPÄISCHE PATENTANMELDUNG

(21) Anmeldenummer: **90120455.2**

(22) Anmeldetag: **25.10.90**

(51) Int. Cl.5: **C09B 57/04**, C09B 26/02, C07D 401/14, C08K 5/34, C09D 7/12

(30) Priorität: **07.11.89 DE 3937004**

(43) Veröffentlichungstag der Anmeldung: **15.05.91 Patentblatt 91/20**

(84) Benannte Vertragsstaaten: **CH DE FR GB LI**

(71) Anmelder: **BAYER AG**
**W-5090 Leverkusen 1 Bayerwerk(DE)**

(72) Erfinder: **Meinhard, Rolf, Dr., Mobay Chemical Corporation**
**Dyes and Pigments Div., Dyes Dept. P.O. Box 10288**
**Bushy Park Plant Charlston, S.C. 29411(US)**

## (54) Metallkomplexverbindungen.

(57) Verbindungen der Formel

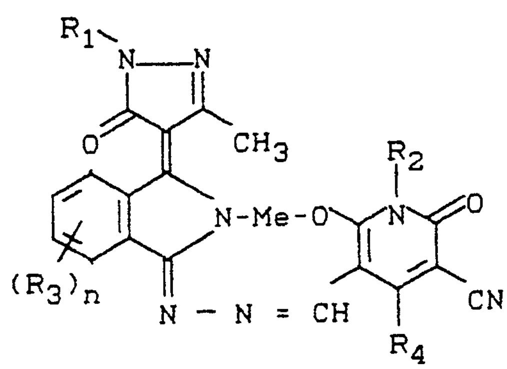

mit den in der Beschreibung angegebenen Substituentenbedeutungen eignen sich zum Pigmentieren makromolekularer Stoffe und liefern hochechte Pigmentierungen.

EP 0 427 048 A2

## METALLKOMPLEXVERBINDUNGEN

Gegenstand der vorliegenden Erfindung sind Verbindungen der Formel

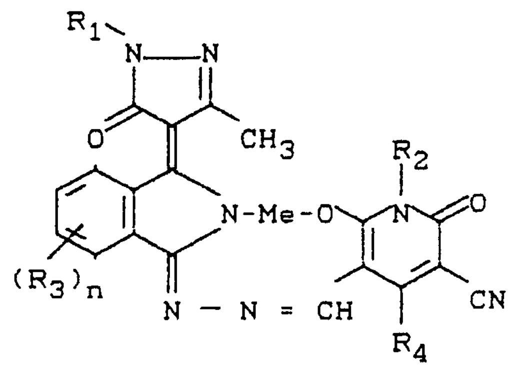

(I)

worin

Me = Zn, Cu, Co-II, Ni

$R_1$ = H, Aryl, Hetaryl

$R_2$ = H, Alkyl, Aryl, Hetaryl, Aralkyl, Cycloalkyl

$R_3$ = Substituent

$R_4$ = H, $CH_3$

n = 0 bis 4.

Die Reste $R_3$ können gleich oder verschieden sein. Me steht vorzugsweise für Ni.

Die Alkyl-, Aryl-, Aralkyl-, Cycloalkyl- und Hetaryl-Reste können gegebenenfalls substituiert sein.

Alkyl steht vorzugsweise für gegebenenfalls substituiertes $C_1$-$C_{20}$-Alkyl (Substituenten beispielsweise Acylamino, insbesondere $C_1$-$C_4$-Alkylcarbonylamino, Carbamoyl, $C_1$-$C_{20}$-Alkoxy, COOH, OH, OCONHR mit R = Alkyl oder Aryl oder aromatische Reste wie Benzyl), wobei die Alkylkette auch durch Heteroatome beispielsweise O unterbrochen sein kann.

Aryl steht vorzugsweise für Phenyl oder Naphthyl, gegebenenfalls substituiert durch 1 bis 4 Substituenten aus der Reihe Halogen wie Cl, Br, F; $C_1$-$C_4$-Alkyl, $C_1$-$C_4$-Alkoxy, Carbamoyl, mono- und di-$C_1$-$C_4$-Alkylcarbamoyl, COOH, $NO_2$, CN, $CF_3$, Acylamino, insbesondere $C_1$-$C_4$-Alkylcarbonylamino sowie gegebenenfalls substituiertes Phenylcarbonylamino (vorzugsweise 1 bis 3 Substituenten Cl, Br, $NO_2$, $C_1$-$C_4$-Alkyl), Ureido, mono-$C_1$-$C_4$-Alkylureido, N-Phenylureido (gegebenenfalls im Phenylring substituiert durch 1 bis 3 Substituenten Cl, $NO_2$, CN, $C_1$-$C_4$-Alkyl, $C_1$-$C_4$-Alkoxy).

Aralkyl steht vorzugsweise für Phenyl-$C_1$-$C_4$-Alkyl, wobei der Phenylrest wie oben angegeben substituiert sein kann.

Cycloalkyl steht vorzugsweise für $C_3$-$C_7$-Cycloalkyl, beispielsweise Cyclopentyl oder Cyclohexyl. Hetaryl steht bevorzugt für gegebenenfalls substituiertes Benzimidazol-2-yl, Benzthiazol-2-yl, Pyridyl oder 4-Chinazolon-2-yl (Substituenten vorzugsweise 1 bis 4 Cl, Br, F, $NO_2$, COOH, CN).

Geeignete Substituenten $R_3$ sind beispielseise Halogen (Cl, Br), $NO_2$, Carbamoyl, mono- und di-$C_1$-$C_4$-Alkylcarbamoyl, $C_1$-$C_4$-Alkoxy, $C_1$-$C_4$-alkylthio, Phenylthio, gegebenenfalls substituiert durch 1 bis 3 Cl, $NO_2$, CN, $C_1$-$C_4$-Alkyl.

Die Reste $R_3$ können gleich oder verschieden sein.

Bevorzugte Arylreste $R_1$ sind Phenyl, Chlorphenyl, 3,4-Dichlorphenyl, 2,5-Dichlorphenyl, Nitrophenyl.

Bevorzugte Arylreste $R_2$ sind Phenyl, Tolyl, Chlorphenyl, 4-Ethoxyphenyl.

Die Herstellung der erfindungsgemäßen Pigmente erfolgt z.B. durch Umsetzung von Isoindolen der Formel

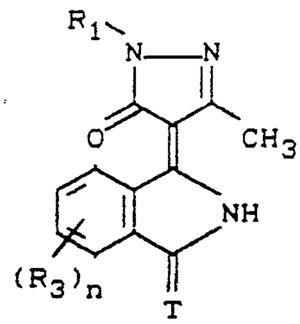

(II)

in der T für NH oder $(OAlkyl)_2$ steht und $R_1$, $R_3$ und n die obengenannte Bedeutung haben, mit Pyridonderivaten der Formel

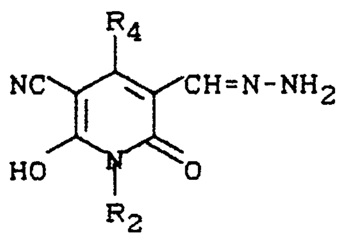

(III)

in der $R_2$ und $R_4$ die obengenannte Bedeutung haben zu Verbindungen der Formel

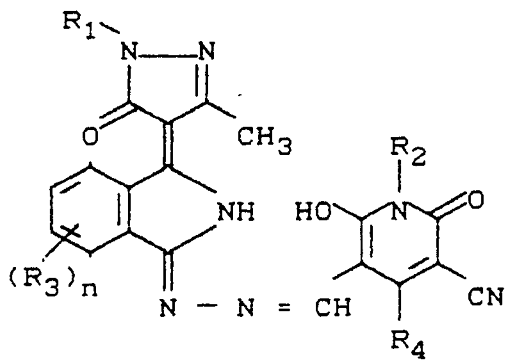

(IV)

welche direkt oder nach Zwischenisolierung mit einer Verbindung $MeX_2$ (Me = Ni, Cu, Co, Zn; X bzw. $X_2$ vorzugsweise = Acetat, Formiat, Chlorid, Sulfat) zum Metallkomplex der Formel (I) umgesetzt werden.

Alternativ kann die Reaktion von (II) mit (III) in Gegenwart von $MeX_2$ durchgeführt werden, wobei direkt die Komplexe (I) entstehen.

Analog sind die Komplexe (1) auch zugänglich durch Umsetzung eines Isoindolhydrazons der Formel

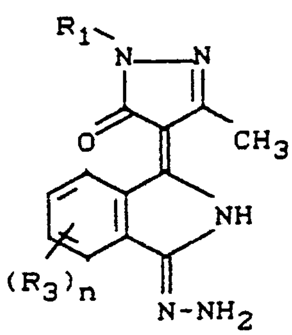

(V)

mit einem Pyridonderivat der Formel

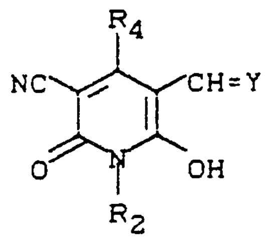

(VI)

in der Y für O oder N-Ph steht, wobei Ph gegebenenfalls substituiertes Phenyl bezeichnet und $R_2$ und $R_4$ die obengenannte Bedeutung haben.

Bei dieser Reaktion entsteht ebenfalls (IV), das dann direkt oder nach Zwischenisolierung zum Komplex (I) umgesetzt werden kann.

Die Ausgangsmaterialien der Formeln (II), (III), (V) und (VI) sind literaturbekannt, bzw. analog literaturbekannten Verfahren herstellbar.

Die Umsetzungen erfolgen in organischen Losungsmitteln, z.B. Dimethylformamid, n-Butanol, Glykolmonomethylether, vorzugsweise bei Temperaturen zwischen 50 und 150 °C.

Die Pigmente (I) treten zum Teil in mehreren Modifikationen auf, die durch anschließendes Tempern bei höheren Temperaturen oder durch Formierungsprozesse erhalten werden können.

Die Pigmente der Formel (I) eignen sich aufgrund ihrer guten Pigmenteigenschaften für die verschiedensten Pigmentapplikationen. So können sie zur Herstellung von sehr echt pigmentierten Systemen, wie Mischungen mit anderen Stoffen, Zubereitungen, Anstrichmitteln, Druckfarben, gefärbtem Papier und gefärbten makromolekularen Stoffen verwendet werden. Unter Mischungen mit anderen Stoffen können z.B. solche mit organischen Weißpigmenten wie Titandioxid (Rutil) verstanden werden. Zubereitungen sind z.B. Flushpasten mit organischen Flüssigkeiten und gegebenenfalls Konservierungsmitteln. Die Bezeichnung Anstrichmittel steht z.B. für physikalisch oder oxidativ trocknende Lacke, Einbrennlacke, Reaktionslacke, Zweikomponentenlacke, Dispersionsfarben für wetterfeste Überzüge und Leimfarben. Unter Druckfarben sind solche für Papier-, Textil- und Blechdruck zu verstehen. Insbesondere eignen sich die neuen Pigmente zum Pigmentieren von makromolekularen organischen Stoffen.

Die makromolekularen Stoffe können natürlichen Ursprungs sein wie Kautschuk, durch chemische Modifikation erhalten werden wie Acetylcellulose, Cellulosebutyrat oder

Viskose oder synthetisch erzeugt werden wie Polymerisate, Polyadditionsprodukte und Polykondensate. Genannt seien plastische Massen wie Polyvinylchlorid, Polyvinylacetat, Polyvinylpropionat, Polyolefine, z.B. Polyethylen oder Polyamide, Superpolyamide, Polymerisate und Mischpolymerisate aus Acrylestern oder Methacrylestern, Acrylnitril, Acrylamid, Butadien, Styrol sowie Polyurethane und Polycarbonate. Die mit den beanspruchten Pigmenten pigmentierten Stoffe können in beliebiger Form vorliegen. Wegen ihrer hohen Transparenz und Wetterechtheit eignen sich die Pigmente der Formel (I) besonders zum Einsatz in Automobillacken, insbesondere für Metalliclackierungen.

Die Pigmente der Formel (I) sind ausgezeichnet wasserecht, ölecht, säureecht, kalkecht, alkaliecht, lösungsmittelecht, überlackierecht, überspritzecht, sublimierecht, hitzebeständig, vulkanisierbeständig, sehr ergiebig, in plastischen Massen gut verteilbar und insbesondere ausgezeichnet lichtecht und migrationsecht.

Beispiel 1

12 g des Isoindol-Derivats der Formel

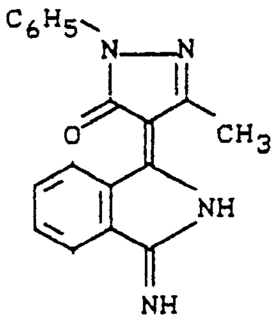

hergestellt aus Aminoimino-isoindolenin und 5-Methyl-2-phenyl-3H-pyrazol-3-on in Methanol, werden mit 8 g Hydrazon der Formel

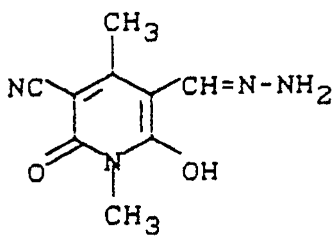

hergestellt aus dem entsprechenden Aldehyd mit Hydrazinhydrat in Ethanol, in 250 ml Dimethylformamid 2 Stunden bei 90 °C gerührt. Dann werden 9,9 g Nickelacetattetrahydrat zugesetzt und kurz auf 120 °C erhitzt. Man saugt heiß ab, wäscht mit Dimethylformamid, Methanol und Wasser.

Man erhält blaustichig rote Kristalle des Komplexes der Formel

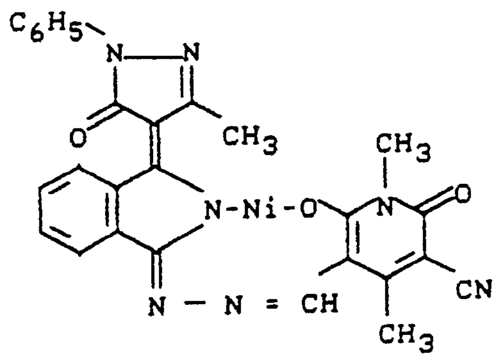

Schmelzpunkt: >300 °C
IR: 3430, 2220, 1626, 1594, 1557, 1494, 1303, 1255, 1162, 1016
UV: Doppelbande 524 und 554 nm (31000 und 31000) in Pyridin
MS: 547 (100 %) $M^{\oplus}$, 118 (18 %).

Beispiel 2

Verfährt man analog Beispiel 1 und verwendet anstatt des dort eingesetzten Isoindol-Zwischenproduktes eine äquimolare Menge der Verbindung

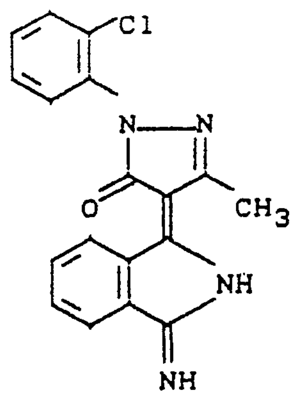

so gelangt man entsprechend zu einem roten Nickelkomplex der Struktur

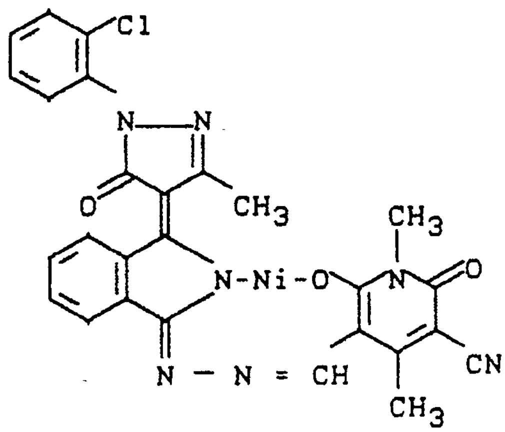

(I)

Schmelzpunkt: > 300 °C
IR: 3438, 2216, 1627, 1597, 1557, 1492, 1335, 1016, 771, 749.
MS: 581 (100 %) $M^{\oplus}$, 152 (10 %)
UV: Doppelbande 524 und 556 nm (32000 und 31500) in Pyridin

Beispiele 3 bis 12

Analog dem in Beispiel 1 genannten Verfahren erhält man bei Einsatz der entsprechenden, durch $R_1$ und $R_2$ gekennzeichneten Ausgangsmaterialien

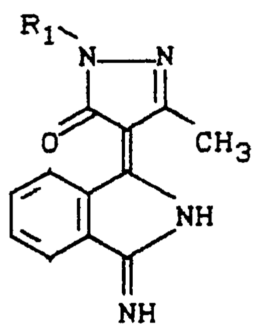

und

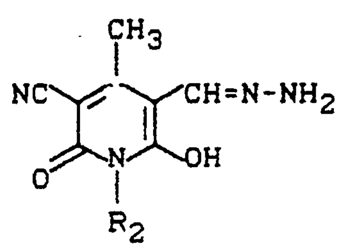

(VII) (VIII)

Nickelkomplexe der Struktur

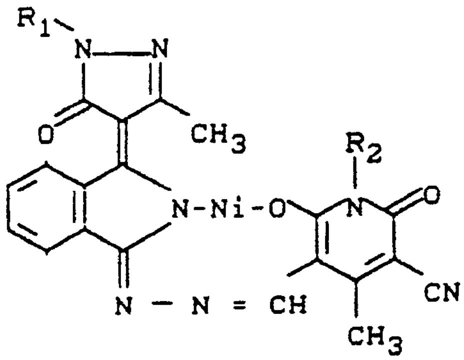

(IX)

mit den in Tabelle 1 genannten Farbtönen und UV-Daten

| Beispiel | VII, $R_1$ | VIII, $R_2$ | Farbton | UV-Daten $\lambda_{max}$, ε (Pyridin) |
|---|---|---|---|---|
| 3 | H | $C_2H_5$ | brill.Rot | 459 und 529 (21000 und 29000) |
| 4 | H | $C_6H_5$ | Rot | 459 und 529 (19500 und 25000) |
| 5 | $C_6H_5$ | H | Rot | 525 und 556 (32000 und 31500) |
| 6 | $C_6H_5$ | $C_2H_5$ | brill.Rot | 524 und 556 (30500 und 30000) |
| 7 | $C_6H_5$ | $C_6H_5$ | Rot | 526, 559 (29000 und 29000) |
| 8 | 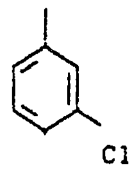 | $CH_3$ | Rot | 526, 559 (27000 und 27500) |
| 9 | 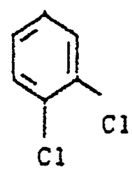 | n-$C_4H_9$ | Rot | 524 und 559 (30000 und 31000) |
| 10 | 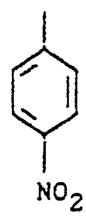 | $CH_3$ | Rot | 526, 559 (27000 und 29500) |
| 11 | $C_6H_5$ | 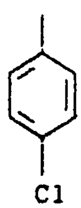 | Rot | 526, 559 (27000 und 27000) |
| 12 | $C_6H_5$ | 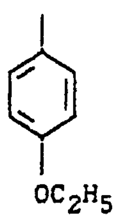 | Rot | 526, 559 (24000 und 23500) |

Beispiele 13 bis 15

Verfährt man nach Beispiel 1 und ersetzt Nickelacetat durch äquimolare Mengen Kupferacetat, Zinkacetat oder Kobalt(II)acetat, erhält man Pigmente der Formel

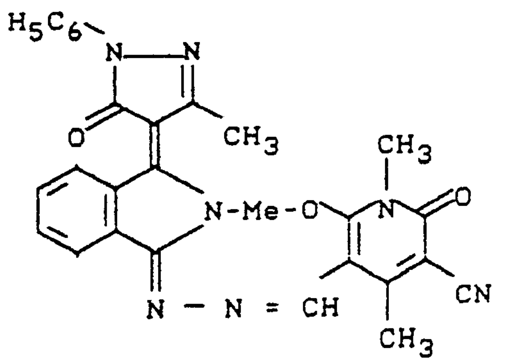

mit den in der Tabelle angegebenen Farbtönen

| Beispiel | Me | Farbton |
|---|---|---|
| 13 | Cu | Braun |
| 14 | Zn | Gelb |
| 15 | Co | Rotbraun |

Beispiel 16 bis 19

Verfährt man nach Beispiel 1 und ersetzt das dort verwendete Isoindol-Zwischenprodukt durch eine äquimolare Menge eines im Isoindol-Aromaten substituierten Produkts, gelangt man analog zu Pigmenten der Formel

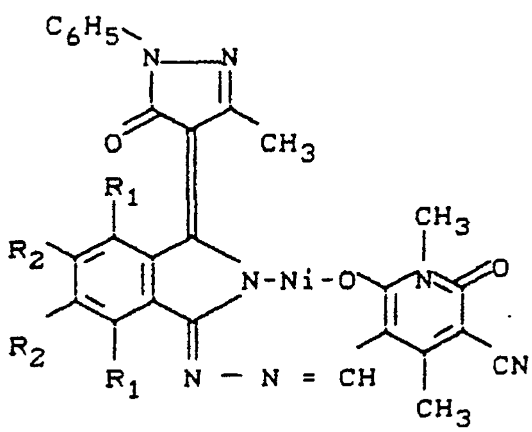

mit den in der Tabelle angegebenen Farbtönen

| Beispiel | $R_1$ | $R_1$ | $R_2$ | $R_2$ | Farbton |
|---|---|---|---|---|---|
| 16 | H | H | Cl | H | Rot |
| 17 | H | H | $NO_2$ | H | Rotbraun |
| 18 | Cl | Cl | Cl | Cl | Orange |
| 19 | Cl | Cl | OMe | Cl | Rot |

Beispiel 20 (Anwendungsbeispiel)

4 g feingemahlenes Pigment gemäß Beispiel 1 werden in 92 g eines Einbrennlackes folgender Zusammensetzung dispergiert:
33 % Alkydharz
15 % Melaminharz
5 % Glykolmonomethylether
34 % Xylol
13 % Butanol

Als Alkydharz kommen Produkte auf Basis synthetischer und pflanzlicher Fettsäuren wie Kokosöl, Rizinusöl, Rizinenöl, Leinöl u.a. in Frage. Anstelle von Melaminharzen können Harnstoffharze verwendet werden.

Nach erfolgter Dispergierung wird der pigmentierte Lack auf Papier-, Glas-, Kunststoff- oder Metallfolien aufgetragen und 30 Minuten bei 130 °C eingebrannt, wobei man eine brillante rote Lackierung erhält.

Beispiel 21 (Anwendungsbeispiel)

6 Teile Pigment nach Beispiel 1 werden in 12 Teilen Xylol, 4,1 Teilen Butylacetat und 0,7 Teilen n-Butanol mit 22,5 Teilen einer 20 %igen Lösung von Celluloseacetobutyrat in Butylacetat/Xylol (2:1) 30 Minuten im Red Devil mit 2 bis 3 mm Glaskugeln dispergiert. Nach Auffetten durch Zusatz von 10 Teilen eines gesättigten Polyesterharzes (Dynapol H 700), 7,3 Teilen Melaminharz, 8,7 Teilen einer 20 %igen Lösung von Celluloseacetobutyrat in Butylacetat/Xylol (2:1), 18 Teilen Butylacetat, 1,6 Teilen n-Butanol und 9,7 Teilen Xylol wird nochmals 5 Minuten dispergiert.

Zu diesem Lack setzt man eine Dispersion von Aluminiumpaste (60 %) in einem organischen Lösungsmittel (ca. 1:2) in der Menge zu, daß das Verhältnis Pigment:Al zwischen 80:20 und 1:99 zu liegen kommt.

Dieser Lack wird aufgestrichen und nach dem Trocknen mit einem Klarlack auf Basis Acrylat/Melaminharz, der weitere Hilfsmittel wie z.B. UV-Absorber enthalten kann, überzogen und eingebrannt.

Man erhält eine rote Metalliclackierung mit brillantem Farbton und ausgezeichneter Wetterechtheit.

Beispiel 22

0,2 g des nach Beispiel 1 erhaltenen Pigmentes werden bei 160 °C auf einem Mischwalzwerk in 65 g stabilisiertem PVC und 35 g Diisooctylphthalat dispergiert und bei 160 °C ausgewalzt. Man erhält eine rote Folie von sehr guter Licht- und Migrationsechtheit.

## Ansprüche

1. Verbindungen der Struktur

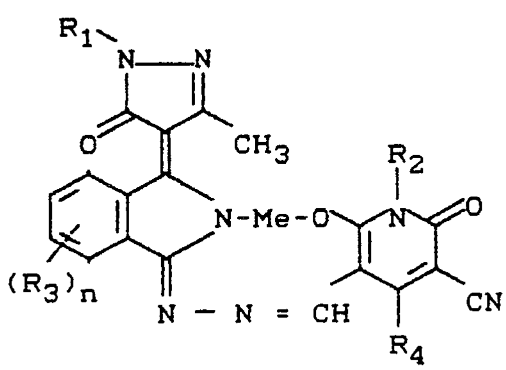

in der
Me = Zn, Cu, Co(II), Ni,
$R_1$ = Wasserstoff, gegebenenfalls substituiertes Aryl, gegebenenfalls substituiertes Hetaryl,
$R_2$ = Wasserstoff, gegebenenfalls substituiertes Alkyl, Cycloalkyl, Aralkyl, Aryl oder Hetaryl,
$R_3$ = Substituent
n = 0 bis 4 und
$R_4$ = Wasserstoff oder Methyl
bedeuten.

2. Verbindungen des Anspruchs 1 mit
$R_1$ = Wasserstoff, Phenyl, α-Naphthyl, β-Naphthyl, 2-Benzthiazolyl, α-Pyridyl, β-Pyridyl, wobei die aromatischen und die heteroaromatischen
Ringe substituiert sein können durch 1 bis 4 Substituenten aus der Reihe Halogen wie Chlor, Brom, Fluor: $C_1$-$C_4$-Alkoxy; Carbamoyl; mono-$C_1$-$C_4$-Carbamoyl; Carboxyl; -$NO_2$; -CN; -$CF_3$; $C_1$-$C_4$-Acylamino; gegebenenfalls durch 1 bis 3 Chlor, Brom, Nitro, $C_1$-$C_4$-Alkyl substituiertes Benzoylamino,
$R_2$ = Wasserstoff, $C_1$-$C_{20}$-Alkyl; durch $C_1$-$C_{20}$-Alkyloxy, Carboxyl, $C_1$-$C_4$-Alkylcarbonylamino, Benzoylamino oder chloriertes Benzoylamino substituiertes $C_2$-$C_6$-Alkyl; Aralkyl, insbesondere Benzyl, wobei der Arylring durch 1 bis 3 Chlor, Nitro, $C_1$-$C_4$-Alkyl, Carbamoyl oder Cyan substituiert sein kann; gegebenenfalls durch 1 bis 3 Halogen wie Chlor und Brom, -$NO_2$, $C_1$-$C_4$-Alkyl, $C_1$-$C_4$-Alkoxy, Ureido (-$NHCONH_2$), mono-$C_1$-$C_4$-Alkylureido, N-Phenylureido, wobei der Phenylring durch 1 bis 3 Chlor, -$NO_2$, -CN, $C_1$-$C_4$-Alkyl, $C_1$-$C_4$-Alkoxy substituiert sein kann, substituiertes Phenyl; oder einen heterocyclischen Rest der Formeln

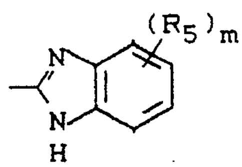
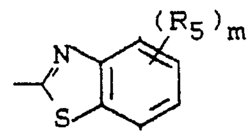
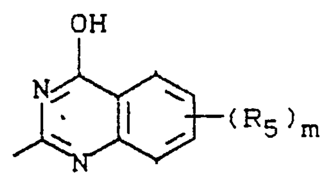

mit
$R_5$ = Chlor, Brom, Fluor, Nitro, Carboxyl bsw. Cyan
m = 0 bis 4
und
$R_3$ = Halogen, insbesondere Chlor und Brom, Nitro, Carbamoyl, mono-$C_1$-$C_4$-Alkyl, $C_1$-$C_4$-Alkoxy, $C_1$-$C_4$-Alkylmercapto gegebenenfalls durch 1 bis 3 Chlor, Nitro, Cyan, $C_1$-$C_4$-Alkyl substituiertes Phenylmercapto.

3. Verbindungen gemäß Ansprüchen 1 und 2 mit n = 0.

4. Verbindungen gemäß Ansprüchen 1 bis 3 mit Me = Ni.

5. Verbindungen gemäß Anspruch 2 mit
$R_2$ = Wasserstoff, $C_1$-$C_6$-Alkyl, Benzyl, gegebenenfalls durch Chlor, Nitro, Methyl, $C_1$-$C_2$-Alkoxy substituiertes Phenyl.

6. Verbindungen gemäfi Anspruch 5 mit
$R_1$ = Wasserstoff, gegebenenfalls durch Chlor, Nitro, Methyl, mono- oder disubsituiertes Phenyl.

7. Verbindung der Formel

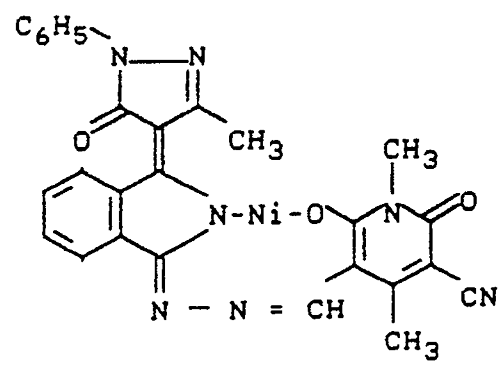

8. Verbindung der Formel

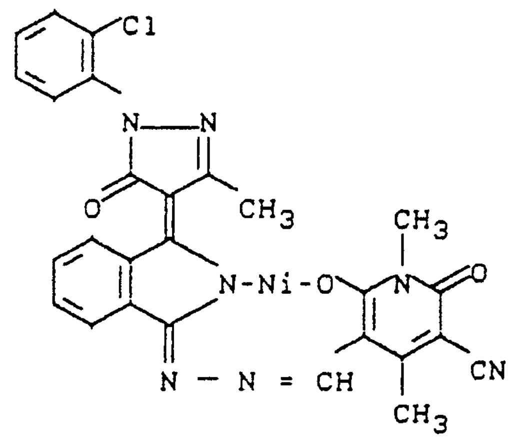

9. Verfahren zum Pigmentieren von makromolekularen organischen Stoffen, dadurch gekennzeichnet, daß man Verbindungen der Ansprüche 1 bis 8 verwendet.

10. Verfahren zum Pigmentieren von Automobillacken, dadurch gekennzeichnet, daß man als Pigmente Verbindungen gemäß Ansprüchen 1 bis 8 verwendet.